# EUROPÄISCHE PATENTANMELDUNG

(11) **EP 2 713 227 A1**
(43) Veröffentlichungstag der Anmeldung: **02.04.2014**
(21) Anmeldenummer: 12186080.3
(22) Anmeldetag: 26.09.2012
(51) Int. Cl.: G05B 19/418, G05B 17/02, G05B 23/02, G05B 19/05

(54) **System und Verfahren zur Steuerung und/oder Überwachung von technischen Prozessen in einem industriellen Automatisierungssystem**

(71) Anmelder: Siemens Aktiengesellschaft, 80333 München (DE)
(72) Erfinder: Peschke, Jörn, 90489 Nürnberg (DE); Schwab, Christian, 90459 Nürnberg (DE); Greiner-Jacob, Ralf, 91349 Egloffstein (DE)

(57) **Zusammenfassung**

Zur Steuerung bzw. Überwachung von technischen Prozessen in einem industriellen Automatisierungssystem wird eine Simulation eines technischen Prozesses mittels einer Funktionsblöcke umfassenden Ereignissteuerung durchgeführt. Dabei umfassen die Funktionsblöcke jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan. Verknüpfungen zwischen Funktionsblöcken sind durch Signalverbindungen realisiert. Für Signalverbindungen wird ein oberer und unterer Signallaufzeitgrenzwert festgelegt, unter deren Berücksichtigung die Steuerung bzw. Überwachung des technischen Prozesses durchgeführt wird.

## Beschreibung

Im Standard IEC 61499 ist eine Architektur zum Entwurf von verteilten industriellen Automatisierungssystemen definiert, die kausale Zusammenhänge zwischen Komponenten von Automatisierungssystemen abbildet. Die im Standard IEC 61499 definierte Architektur basiert auf einer Funktionsblöcke umfassenden Ereignissteuerung, anhand derer technische Prozesse in einem verteilten Automatisierungssystem für dessen funktionalen Entwurf simuliert werden. Ein Funktionsblock umfaßt Ereignis- bzw. Daten-Eingänge, zugeordnete Ereignis - bzw. Daten-Ausgänge, eine Ausführungskontrolleinrichtung (Execution Control Chart - ECC) sowie Steuerungsalgorithmen zur Verarbeitung von Eingangsdaten. Durch die Ausführungskontrolleinrichtung können Ereignisse (Events) mit zugehörigen Daten beispielsweise von einer ersten Ausführungskontrolleinrichtung an eine zweite Ausführungskontrolleinrichtung übertragen werden. Hierdurch wird eine Verarbeitung von der ersten Ausführungskontrolleinrichtung übertragener Daten bzw. deren Ausgabe durch die zweite Ausführungskontrolleinrichtung getriggert.

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Aus V.Vyatkin, H.-M. Hanisch, "Reuse of Components in Formal Modeling and Verification of Distributed Control Systems", 10th IEEE International Conference on Emerging Technologies and Factory Automation (ETFA 2005), Catania, Italien, 19.-22.09.2005 September, Seite 129-134 ist ein Verfahren zur Modellierung und Verifizierung eines Automatisierungssystems bekannt, das auf dem Standard IEC 61499 aufbaut. Durch eine modulare Modellierung von Komponenten eines Automatisierungssystems auf Basis einer objektorientierten Beschreibung wird eine hohe Wiederverwertbarkeitsrate von Modellierungskomponenten erzielt. Dies ermöglicht einen effizienten, fehlerarmen Entwurf von verteilten Automatisierungssystemen.

Der vorliegenden Erfindung liegt die Aufgabe zugrunde, ein System und Verfahren zur Steuerung bzw. Überwachung von durch Automatisierungsgeräte beeinflußten technischen Prozessen in einem industriellen Automatisierungssystem anzugeben, das insbesondere bei Nutzung von Fernwirksystemen in verteilten Automatisierungssystemen eine zuverlässige und genaue Prozeßsteuerung bzw. -überwachung ermöglicht.

Diese Aufgabe wird erfindungsgemäß durch ein System mit den in Anspruch 1 genannten Merkmalen und durch ein Verfahren mit den in Anspruch 11 genannten Merkmalen gelöst. Vorteilhafte Weiterbildungen der vorliegenden Erfindung sind in den abhängigen Ansprüchen angegeben.

Das erfindungsgemäße System zur Steuerung bzw. Überwachung von technischen Prozessen in einem industriellen Automatisierungssystem weist eine Funktionsblöcke umfassende Ereignissteuerung auf. Die Funktionsblöcke umfassen dabei jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan. Verknüpfungen zwischen Funktionsblöcken sind durch Signalverbindungen realisiert. Die Ablaufsteuerungseinheiten der Funktionsblöcke können beispielsweise jeweils einen Zustandsautomaten mit durch den jeweiligen Ablaufsteuerungsplan definierbaren Zustandsübergängen umfassen. Darüber hinaus ist eine Schwellwertdefinitionseinheit vorgesehen, die zur Festlegung eines oberen und unteren Signallaufzeitgrenzwerts für Signalverbindungen eingerichtet und ausgestaltet ist. Die oberen und unteren Signallaufzeitgrenzwerte für die Signalverbindungen zwischen den Funktionsblöcken sind vorzugsweise in einer der Ereignissteuerung zugeordneten Schwellwertspeichereinheit gespeichert.

Darüber hinaus umfaßt das erfindungsgemäße System eine Simulationseinheit, die zur Ermittlung bzw. Darstellung von Signallaufzeitauswirkungen innerhalb der Ereignissteuerung anhand festgelegter Signallaufzeitgrenzwerte eingerichtet und ausgestaltet ist. Außerdem ist der Ereignissteuerung eine Konfigurationseinheit zugeordnet, die zur Modifikation bzw. Verifizierung von Funktionsblock-Parametern anhand ermittelter Signallaufzeitauswirkungen eingerichtet und ausgestaltet ist. Des weiteren ist die Konfigurationseinheit zur Übertragung eines modifizierten Parametersatzes an ein Automatisierungsgerät innerhalb des industriellen Automatisierungssystems eingerichtet und ausgestaltet ist. Dies ermöglicht eine zuverlässige und genaue Prozeßsteuerung.

Mit dem erfindungsgemäßen System können bei einem beispielsweise auf dem Standard IEC 61499 aufbauenden Entwurf von Steuerungsanwendung für industrielle Automatisierungssysteme zeitliche Aspekte einer Signalübertragung zwischen Funktionsblöcken berücksichtigt werden. Insbesondere bei einer Nutzung von Fernwirksystemen ist dies äußerst wichtig. Da Kommunikation in Fernwirksystemen über weite Strecken erfolgt, treten hier nicht zu vernachlässigende Signallaufzeiten auf, die deutlich über denen in lokalen Systemen liegen. Zudem wird für eine Realisierung von Fernwirksystemen häufig auf öffentliche Netzinfrastruktur, wie Mobilfunknetze oder Internet, mit eher geringen Datenübertragungsraten bzw. hohen Antwortzeiten zurückgegriffen. Dies trägt grundsätzlich zu einer Verschärfung obiger Problematik ein. Mit der vorliegenden Erfindung können derartige Effekte systematisch erkannt und robuste Regelungssysteme realisiert werden.

Entsprechend einer vorteilhaften Weiterbildung des erfindungsgemäßen Systems ist die Schwellwertdefinitionseinheit zur Festlegung eines für jede Signalverbindung individuellen oberen und unteren Signallaufzeitgrenzwerts ausgestaltet und eingerichtet. Des weiteren kann der obere oder untere Signallaufzeitgrenzwert ein uneigentlicher Grenzwert sein, so daß durch den oberen und unteren Signallaufzeitgrenzwert ein halboffenes Intervall definiert ist.

Ein Funktionsblock kann beispielsweise einem Automatisierungsgerät innerhalb des industriellen Automatisierungssystems zugeordnet sein. Vorzugsweise sind für Signalverbindungen zwischen zwei Funktionsblöcken, die demselben Automatisierungsgerät zugeordnet sind, verschwindende obere und untere Signallaufzeitgrenzwerte definiert. Entsprechend einer weiteren vorteilhaften Ausgestaltung der erfindungsgemäßen Systems sind auch für Signalverbindungen zwischen zwei Funktionsblöcken, die Automatisierungsgeräten innerhalb desselben lokalen Kommunikationsnetzes zugeordnet sind, verschwindende obere und untere Signallaufzeitgrenzwerte definiert. Vorteilhafterweise sind nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert. Dies ermöglicht einen relativ geringen zusätzlichen Modellierungsaufwand, ohne dabei jedoch gravierende Einschränkungen hinsichtlich Genauigkeit von Simulationsergebnissen in weit verteilten Automatisierungssystemen zu machen.

Entsprechend einer besonders bevorzugten Ausgestaltung des erfindungsgemäßen Systems ist der Ereignissteuerung eine Überprüfungseinheit zugeordnet, die für eine Durchführung einer Simulation des technischen Prozesses unter Vorgabe der oberen Signallaufzeitgrenzwerte und für eine Durchführung einer Simulation des technischen Prozesses unter Vorgabe der unteren Signallaufzeitgrenzwerte eingerichtet und ausgestaltet ist. Dies ermöglicht bei handhabbarem Simulationsaufwand eine hinreichend genaue Abschätzung einer Auswirkung von Signallaufzeiten in einem verteilten Automatisierungssystem.

Beim erfindungsgemäßen Verfahren zur Steuerung bzw. Überwachung von technischen Prozessen in einem industriellen Automatisierungssystem wird die Steuerung des technischen Prozesses mittels einer Funktionsblöcke umfassenden Ereignissteuerung durchgeführt wird. Dabei umfassen die Funktionsblöcke jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan. Verknüpfungen zwischen Funktionsblöcken sind durch Signalverbindungen realisiert. Durch einen Ablaufsteuerungsplan werden beispielsweise jeweils Zustandsübergänge eines Zustandsautomaten definiert, der von einer Ablaufsteuerungseinheit eines Funktionsblocks umfaßt ist. Darüber hinaus wird für Signalverbindungen ein oberer und unterer Signallaufzeitgrenzwert festgelegt, unter deren Berücksichtigung eine Simulation oder Beobachtung des technischen Prozesses durchgeführt wird. Die oberen und unteren Signallaufzeitgrenzwerte für die Signalverbindungen zwischen den Funktionsblöcken können beispielsweise in einer der Ereignissteuerung zugeordneten Schwellwertspeichereinheit gespeichert werden. Vorzugsweise wird für jede Signalverbindung ein individueller oberer und unterer Signallaufzeitgrenzwert festgelegt.

Darüber hinaus werden entsprechend dem erfindungsgemäßen Verfahren anhand festgelegter Signallaufzeitgrenzwerte Signallaufzeitauswirkungen innerhalb der Ereignissteuerung ermittelt bzw. dargestellt. Mittels einer der Ereignissteuerung zugeordneten Konfigurationseinheit werden Funktionsblock-Parameter anhand ermittelter Signallaufzeitauswirkungen modifiziert bzw. verifiziert. Ein modifizierter Parametersatz wird mittels der Konfigurationseinheit an ein Automatisierungsgerät innerhalb des industriellen Automatisierungssystems übertragen. Insgesamt ermöglicht das erfindungsgemäße Verfahren eine schnelle und relativ einfache Berücksichtung von Laufzeiteffekten bei einer Interaktion zwischen über weite Distanzen voneinander entfernten Komponenten eines industriellen Automatisierungssystems. Auf dieser Grundlage können zuverlässig robuste Regelungssysteme realisiert werden.

Durch den oberen und unteren Signallaufzeitgrenzwert kann grundsätzlich ein halboffenes Intervall definiert werden, indem für den oberen oder unteren Signallaufzeitgrenzwert ein uneigentlicher Grenzwert vorgegeben wird. Ein Funktionsblock ist beispielsweise einem Automatisierungsgerät innerhalb des industriellen Automatisierungssystems zugeordnet. Wird beispielsweise pro Funktion eines Automatisierungsgeräts ein Funktionsblock modelliert, ist eine einfache Ableitung einer Modellierung bzw. Parametrierung für ähnliche Automatisierungsgeräte möglich, indem auf zuvor erstellte Funktionsblöcke für im wesentlichen identische Teilfunktionen zurückgegriffen wird.

Vorzugsweise werden für Signalverbindungen zwischen zwei Funktionsblöcken, die demselben Automatisierungsgerät zugeordnet sind, verschwindende obere und untere Signallaufzeitgrenzwerte definiert. In entsprechender Weise gilt dies auch für Signalverbindungen zwischen zwei Funktionsblöcken, die Automatisierungsgeräten innerhalb desselben lokalen Kommunikationsnetzes zugeordnet sind. Entsprechend einer bevorzugten Weiterbildung des erfindungsgemäßen Verfahrens werden nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert.

Der Ereignissteuerung ist entsprechend einer weiteren Ausgestaltung des erfindungsgemäßen Verfahrens eine Überprüfungseinheit zugeordnet ist, mittels derer eine Simulation des technischen Prozesses einerseits unter Vorgabe der oberen Signallaufzeitgrenzwerte und andererseits unter Vorgabe der unteren Signallaufzeitgrenzwerte durchgeführt wird. Dies ermöglicht eine relativ einfache und effiziente Abschätzung von Laufzeiteffekten in einem verteilten Automatisierungssystem sowie eine Berücksichtigung dieser Laufzeiteffekte bei laufender Prozeßsteuerung.

Die vorliegende Erfindung wird nachfolgend an einem Ausführungsbeispiel anhand der Zeichnung näher erläutert. Es zeigt
- Figur 1: eine schematische Darstellung eines Systems zur Steuerung und Überwachung von technischen Prozessen in einem industriellen Automatisierungssystem,
- Figur 2: ein Anwendungsbeispiel eines Systems zur Steuerung und Überwachung von technischen Prozessen in einer Wasserversorgungsanlage mit einer Pumpensteuerungsvorrichtung und einer Füllstandsmeßvorrichtung,
- Figur 3: ein Funktionsblockschaltbild der über eine Mobilfunkverbindung miteinander gekoppelten Pumpensteuerungsvorrichtung und Füllstandsmeßvorrichtung des Systems gemäß Figur 2,
- Figur 4: eine schematische Darstellung eines Ablaufsteuerungsplans der Pumpensteuerungsvorrichtung des Systems gemäß Figur 2.

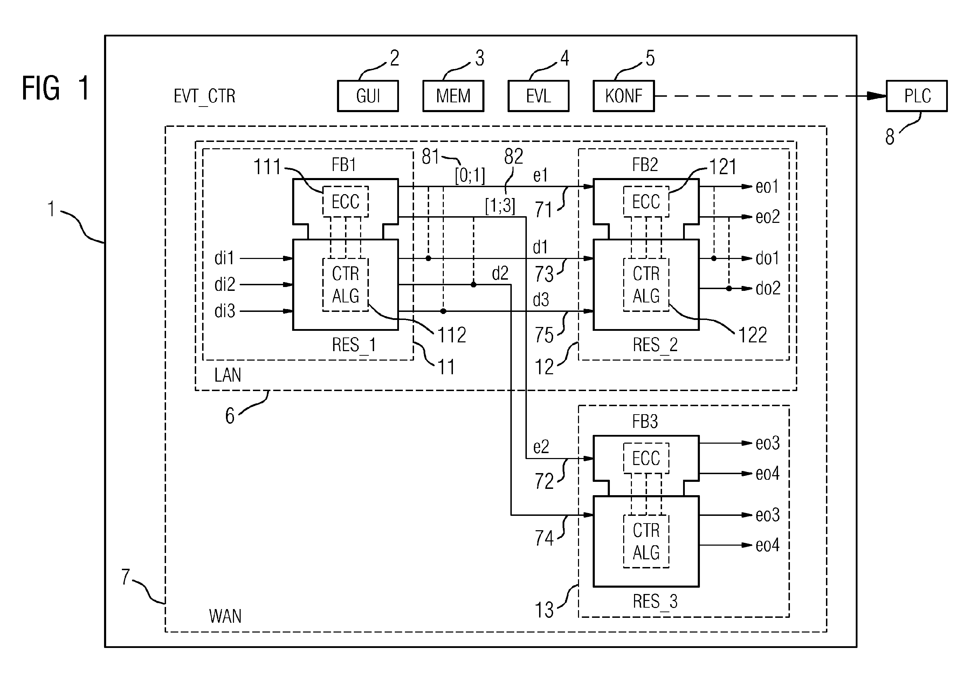

Das in Figur 1 dargestellte System zur Steuerung und Überwachung von technischen Prozessen in einem industriellen Automatisierungssystem weist eine mehrere Funktionsblöcke 11-13 umfassenden Ereignissteuerung 1 auf. Im vorliegenden Ausführungsbeispiel wird durch einen ersten Funktionsblock 11 ein Sensor innerhalb des industriellen Automatisierungssystems beschaltet, während ein zweiter und dritter Funktionsblock 12, 13 jeweils ein Anzeigegerät beschalten. Der Sensor und ein erstes Anzeigegerät sind innerhalb eines lokalen Kommunikationsnetzes 6 miteinander verbunden, während der Sensor und ein zweites Anzeigegerät, das beispielsweise einer entfernten Warte zugeordnet ist, innerhalb eines Weitverkehrsnetzes 7 miteinander verbunden sind. An einer der Ereignissteuerung 1 zugeordneten graphischen Benutzerschnittstelle 2 sind der erste und zweite Funktionsblock 11, 12 dementsprechend als durch ein lokales Kommunikationsnetz 6 umfaßt dargestellt. Alle drei Funktionsblöcke 11-13 sind zusätzlich durch ein Weitverkehrsnetz 7 umfaßt dargestellt.

Im vorliegenden Ausführungsbeispiel mißt der Sensor in seiner Umgebung Temperatur (di1), Luftdruck (di2), und Luftfeuchtigkeit (di3). An einem ersten Ereignis-Ausgang stellt der Sensor ein erstes Ereignissignal (e1), das Informationen über Temperatur (d1) und Luftfeuchtigkeit (d3) umfaßt, für das erste Anzeigegerät bereit. Zusätzlich stellt der Sensor an einem zweiten Ereignis-Ausgang ein zweites Ereignissignal (e2), das Informationen über den Luftdruck (d2) umfaßt, für das zweite Anzeigegerät bereit.

Jeder Funktionsblock 11-13 umfaßt im vorliegenden Ausführungsbeispiel jeweils zumindest einen Ereignis- bzw. Daten-Eingang zur Aufnahme von Eingangssignalen, zumindest einen Ereignis- bzw. Daten-Ausgang zur Ausgabe von Ausgangssignalen, eine Eingangssignale in Ausgangssignale umsetzende Ablaufsteuerungseinheit 112, 122, 132 und einen veränderbaren von der Ablaufsteuerungseinheit 112, 122, 132 verarbeitbaren Ablaufsteuerungsplan 111, 121, 131. Verknüpfungen zwischen den Funktionsblöcken 11-13 sind entsprechend obiger Bereitstellung der beiden Ereignissignale (e1, e2) durch Signalverbindungen 71-75 realisiert. Die Ablaufsteuerungseinheiten 112, 122, 132 der Funktionsblöcke 11-13 umfassen jeweils einen Zustandsautomaten mit durch den jeweiligen Ablaufsteuerungsplan 111, 121, 131 definierbaren Zustandsübergängen. Durch die der Ereignissteuerung zugeordnete graphische Benutzerschnittstelle 2 ist eine Schwellwertdefinitionseinheit realisiert, mittels derer für die Signalverbindungen 71-75 ein oberer und unterer Signallaufzeitgrenzwert festgelegt wird. Unter Berücksichtigung dieser Signallaufzeitgrenzwerte wird die Simulation des technischen Prozesses durchgeführt. Der obere und untere Signallaufzeitgrenzwert definieren für eine Signalverbindung jeweils ein Zeitintervall 81, 82, innerhalb dessen ein Datenaustausch abgeschlossen ist. Die oberen und unteren Signallaufzeitgrenzwerte für die Signalverbindungen 71-75 zwischen den Funktionsblöcken 11-13 werden in einer der Ereignissteuerung 1 zugeordneten Schwellwertspeichereinheit 3 gespeichert. Darüber hinaus ist der Ereignissteuerung 1 eine Überprüfungseinheit 4 zugeordnet, mittels derer eine Simulation des technischen Prozesses einerseits unter Vorgabe der oberen Signallaufzeitgrenzwerte und andererseits unter Vorgabe der unteren Signallaufzeitgrenzwerte durchgeführt wird. Anhand der festgelegten Signallaufzeitgrenzwerte ermittelt die Überprüfungseinheit 4 Signallaufzeitauswirkungen innerhalb der Ereignissteuerung 1. Diese Signallaufzeitauswirkungen werden auch bei einer Prozeßsteuerung berücksichtigt.

Im vorliegenden Ausführungsbeispiel ist ein solches Zeitintervall 81, 82 jeweils für die Signalverbindungen 71, 72 definiert, über welche das erste und zweite Ereignissignal (e1, e2) bereitgestellt werden. Angaben in Figur 1 sind dabei auf 1 Sekunde normiert.

Grundsätzlich können für die Zeitintervalle 81, 82 folgende Definitionen gemacht werden:
- [x; y] für den Fall, daß ein Datenaustausch frühestens nach x Sekunden, spätestens jedoch nach y Sekunden abgeschlossen ist;
- [0; x] für den Fall, daß ein Datenaustausch sofort oder spätestens innerhalb von x Sekunden abgeschlossen ist;
- [x; ∞] für den Fall, daß ein Datenaustausch frühestens nach x Sekunden abgeschlossen ist;
- [x; ∞] für den Fall, daß ein Datenaustausch zu einem unbestimmten Zeitpunkt abgeschlossen ist.

Entsprechend Figur 1 wird das erste Ereignissignal (e1) also sofort oder spätestens innerhalb von einer Sekunde an das erste Anzeigegerät bereitgestellt, während das zweite Ereignissignal (e2) frühestens nach einer Sekunde und spätestens nach drei Sekunden an das zweite Anzeigegerät bereitgestellt wird. Im Rahmen einer Prozeßsteuerung können die für das erste Ereignissignal (e1) und das zweite Ereignissignal (e2) festgelegten Zeitintervalle 81, 82 beispielsweise derart berücksichtigt werden, daß bei Ausbleiben eines Ereignissignals frühestens nach Ablauf von einer Sekunde (e1) bzw. 3 Sekunden (e2) eine Fehlermeldung generiert wird. Darüber hinaus wird ein vor einem unteren Signallaufzeitgrenzwert eintreffendes Ereignissignal vorzugsweise als nicht zuordenbar verworfen. Beispielsweise wird das zweite Ereignissignal (e2) bei einer Reaktion vor einer Ablaufzeit von einer Sekunde verworfen. Bei einem solchen Verwerfen eines Ereignissignals kann zusätzlich eine Fehlermeldung erzeugt werden.

Grundsätzlich könnten für Signalverbindungen zwischen zwei Funktionsblöcken, die demselben Automatisierungsgerät zugeordnet sind, entsprechend einem anderen Ausführungsbeispiel verschwindende obere und untere Signallaufzeitgrenzwerte definiert werden. Dies kann auch für Signalverbindungen zwischen zwei Funktionsblöcken gelten, die Automatisierungsgeräten innerhalb desselben lokalen Kommunikationsnetzes zugeordnet sind. In entsprechender Weise können nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert sein.

Das in Figur 1 dargestellte System umfaßt ferner eine der Ereignissteuerung 1 zugeordnete Konfigurationseinheit 5. Mittels dieser Konfigurationseinheit 5 werden Funktionsblock-Parameter unter Berücksichtigung durch die Überprüfungseinheit 4 ermittelter Signallaufzeitauswirkungen modifiziert bzw. verifiziert. Falls Modifikationen erforderlich sind, übertragt die Konfigurationseinheit 5 einen modifizierten Parametersatz an ein von Laufzeiteffekten innerhalb eines industriellen Automatisierungssystems betroffenes Automatisierungsgerät 8. Ein solches Automatisierungsgerät 8 ist im vorliegenden Ausführungsbeispiel eine speicherprogrammierbare Steuerung.

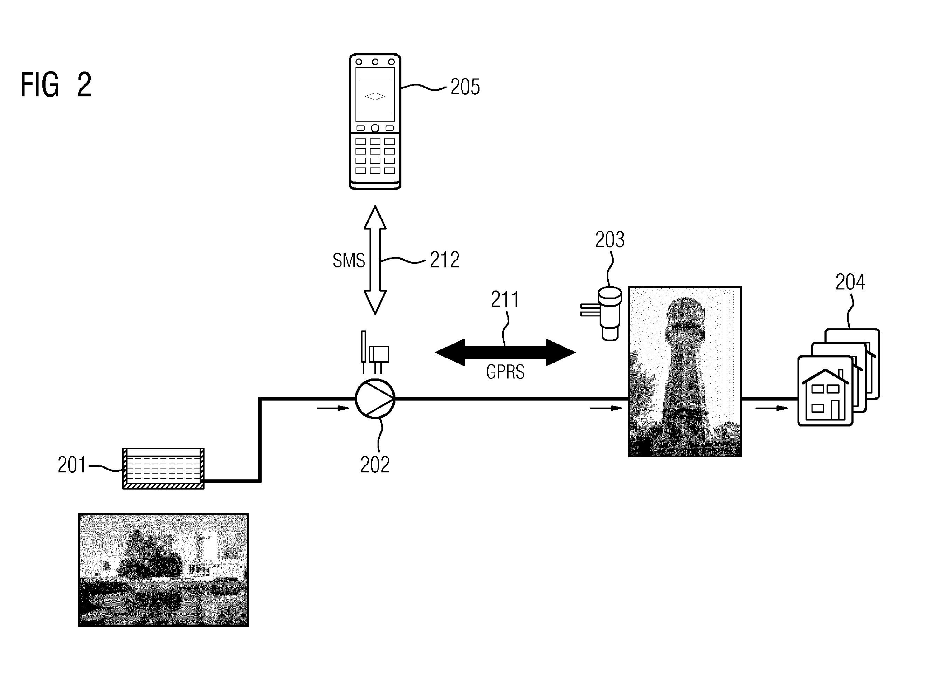

Bei dem in Figur 2 dargestellten Anwendungsbeispiel umfaßt ein System zur Steuerung und Überwachung von technischen Prozessen in einer Wasserversorgungsanlage eine Pumpensteuerungsvorrichtung 202 und eine Füllstandsmeßvorrichtung 203. Die Pumpe Pumpensteuerungsvorrichtung 202 fördert in Abhängigkeit von einem durch die Füllstandsmeßvorrichtung 203 ermittelten Füllstandswert Trinkwasser von einer Wasseraufbereitungsanlage 201 in ein der Füllstandsmeßvorrichtung 203 zugeordnetes Wasserreservoir. Das Wasserreservoir kann beispielsweise ein Wasserturm zur pumpenfreien Weiterleitung von Trinkwasser an Haushalte 204 innerhalb eines vorgegebenen Versorgungsgebiets sein.

Sowohl die Pumpensteuerungsvorrichtung 202 als auch die Füllstandsmeßvorrichtung 203 umfassen jeweils eine speicherprogrammierbare Steuerung als Automatisierungsgerät. Die Pumpensteuerungsvorrichtung 202 und die Füllstandsmeßvorrichtung 203 sind im vorliegenden Ausführungsbeispiel miteinander über eine GPRS-Mobilfunkverbindung 211 (General Packet Radio Service) mit einer Übertragungsdauer zwischen ca. 500 ms und 4 s verbunden. Darüber hinaus besteht zwischen der Pumpensteuerungsvorrichtung 202 und einem Mobilkommunikationsgerät 205 für einen Service-Techniker eine SMS-Kommunikationsverbindung 212 (Short Message Service).

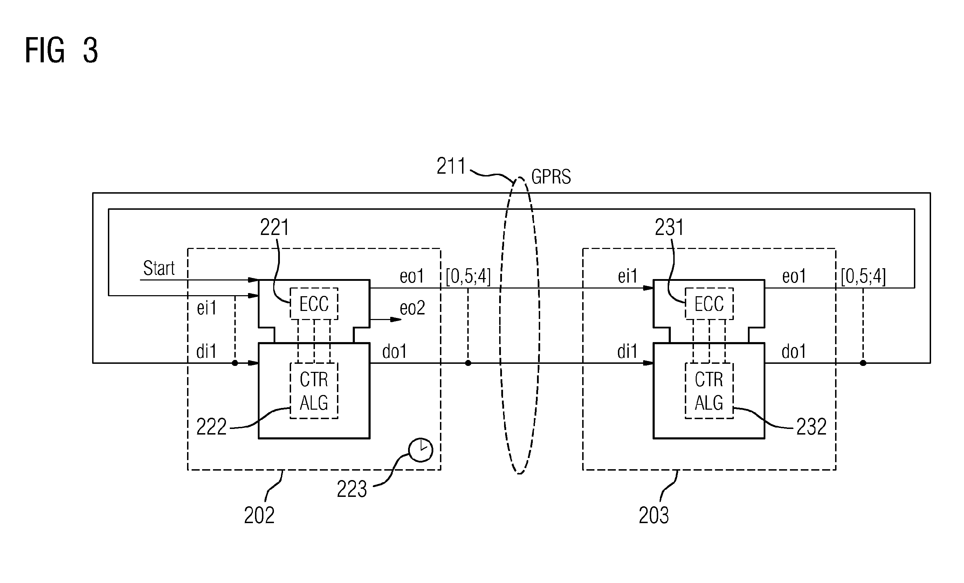

Entsprechend dem in Figur 3 dargestellte Funktionsblockschaltbild der über eine GPRS-Mobilfunkverbindung 211 miteinander gekoppelten Pumpensteuerungsvorrichtung 202 und Füllstandsmeßvorrichtung 203 wird nach Start einer Steuerungsapplikation sendet eine Ablaufsteuerungseinheit 222 der Pumpensteuerungsvorrichtung 202 eine Füllstandsabfrage als ausgehendes Ereignissignal (eo1) an eine Ablaufsteuerungseinheit 232 der Füllstandsmeßvorrichtung 203. Dies erfolgt entsprechend einem der Pumpensteuerungsvorrichtung 202 zugeordneten Ablaufsteuerungsplan 221. Eine Verarbeitung der Füllstandsabfrage durch die Füllstandsmeßvorrichtung 203 erfolgt entsprechend einem der Füllstandsmeßvorrichtung 203 zugeordneten Ablaufsteuerungsplan 231. Gleichzeitig mit einem Senden des Ereignissignals (eo1) zur Füllstandsabfrage startet die Ablaufsteuerungseinheit 222 der Pumpensteuerungsvorrichtung 202 eine lokale Uhr 223.

Die Füllstandsabfrage wird nach der angenommenen Übertragungsdauer zwischen 500 ms und 4 s, also spätestens nach 4 s, durch die Ablaufsteuerungseinheit 232 der Füllstandsmeßvorrichtung 203 bearbeitet. Nach Ermittlung eines Füllstandwertes mit einer angenommenen Verarbeitungsdauer von 100 ms sendet die Ablaufsteuerungseinheit 232 der Füllstandsmeßvorrichtung 203 ein Ereignissignal (eo1) mit dem Füllstandswert über die GPRS-Mobilfunkverbindung 211 an die Ablaufsteuerungseinheit 222 der Pumpensteuerungsvorrichtung 202. Der Füllstandsmeßwert wird dort nach der angenommenen Übertragungsdauer zwischen 500 ms und 4 s weiterverarbeitet.

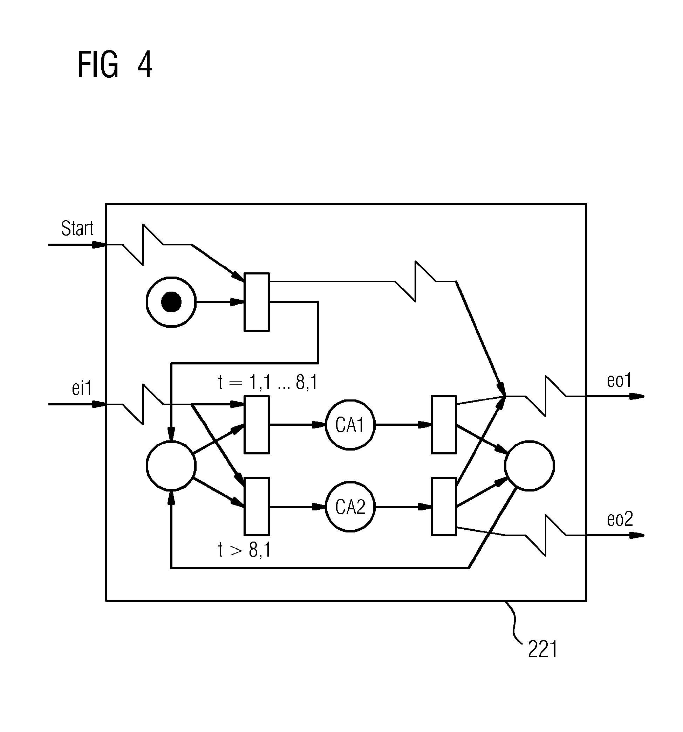

Entsprechend dem in Figur 4 schematisch dargestellten Ablaufsteuerungsplan 231 der Pumpensteuerungsvorrichtung 202 wird der Füllstandsmeßwert als eingehendes Ereignissignal (ei1) in Abhängigkeit von der Übertragungsdauer weiterverarbeitet. Hierzu wird eine Signalumlaufzeit, die aus einem Übermitteln der Füllstandsabfrage und des Füllstandsmeßwerts resultiert, mit einem Zeitwert der lokalen Uhr 223 verglichen. Liegt die Signalumlaufzeit in einem Intervall t zwischen 1,1 s und 8.1 s, wird ein erster Steuerungsalgorithmus (CA1) abgearbeitet. Durch den ersten Steuerungsalgorithmus (CA1) wird eine Pumpenleistung in Abhängigkeit vom Füllstandsmeßwert eingestellt. Liegt die Signalumlaufzeit dagegen über einem Maximalwert von 8,1 s wird ein zweiter Steuerungsalgorithmus (CA2) ausgeführt. Durch den zweiten Steuerungsalgorithmus (CA2) kann beispielsweise eine Ersatzwertermittlung für den Füllstandsmeßwert bzw. ein Datenlogging in einem Archiv sein. Das Datenlogging dient zur Dokumentation, daß eine Füllstandsabfrage nicht im vorgesehenen Intervall t (1,1 s bis 8.1 s) beantwortet worden ist. Außerdem wird durch den zweiten Steuerungsalgorithmus (CA2) eine Warn-SMS als ausgehendes Ereignissignal (eo2) von der Pumpensteuerungsvorrichtung 202 an das Mobilkommunikationsgerät 205 für einen Service-Techniker übermittelt.

Die Merkmale der vorangehend beschriebenen Ausführungsbeispiele können sowohl einzeln als auch in beschriebener Kombination miteinander realisiert sein.

## Patentansprüche

1. System zur Steuerung und/oder Überwachung von technischen Prozessen in einem industriellen Automatisierungssystem mit
- einer Funktionsblöcke umfassenden Ereignissteuerung, wobei die Funktionsblöcke jeweils zumindest einen Ereignis- und/oder Daten-Eingang zur Aufnahme von Eingangssignalen, zumindest einen Ereignis- und/oder Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan umfassen, und wobei Verknüpfungen zwischen Funktionsblöcken durch Signalverbindungen realisiert sind,
- einer Schwellwertdefinitionseinheit, die zur Festlegung eines oberen und unteren Signallaufzeitgrenzwerts für Signalverbindungen eingerichtet und ausgestaltet ist,
- einer Simulationseinheit, die zur Ermittlung und/oder Darstellung von Signallaufzeitauswirkungen innerhalb der Ereignissteuerung anhand festgelegter Signallaufzeitgrenzwerte eingerichtet und ausgestaltet ist,
- einer der Ereignissteuerung zugeordneten Konfigurationseinheit, die zur Modifikation und/oder Verifizierung von Funktionsblock-Parametern anhand ermittelter Signallaufzeitauswirkungen und zur Übertragung eines modifizierten Parametersatzes an ein Automatisierungsgerät innerhalb des industriellen Automatisierungssystems eingerichtet und ausgestaltet ist.

2. System nach Anspruch 1,
bei dem die Ablaufsteuerungseinheiten der Funktionsblöcke jeweils einen Zustandsautomaten mit durch den jeweiligen Ablaufsteuerungsplan definierbaren Zustandsübergängen umfaßt.

3. System nach einem der Ansprüche 1 oder 2,
bei dem die Schwellwertdefinitionseinheit zur Festlegung eines für jede Signalverbindung individuellen oberen und unteren Signallaufzeitgrenzwerts ausgestaltet und eingerichtet ist.

4. System nach einem der Ansprüche 1 bis 3,
bei dem der obere oder untere Signallaufzeitgrenzwert ein uneigentlicher Grenzwert ist, wobei durch den oberen und unteren Signallaufzeitgrenzwert ein halboffenes Intervall definiert ist.

5. System nach einem der Ansprüche 1 bis 4,
bei dem die oberen und unteren Signallaufzeitgrenzwerte für die Signalverbindungen zwischen den Funktionsblöcken in einer der Ereignissteuerung zugeordneten Schwellwertspeichereinheit gespeichert sind.

6. System nach einem der Ansprüche 1 bis 5,
bei dem ein Funktionsblock einem Automatisierungsgerät innerhalb des industriellen Automatisierungssystems zugeordnet ist.

7. System nach Anspruch 6,
bei dem für Signalverbindungen zwischen zwei Funktionsblöcken, die demselben Automatisierungsgerät zugeordnet sind, verschwindende obere und untere Signallaufzeitgrenzwerte definiert sind.

8. System nach einem der Ansprüche 6 oder 7,
bei dem für Signalverbindungen zwischen zwei Funktionsblöcken, die Automatisierungsgeräten innerhalb desselben lokalen Kommunikationsnetzes zugeordnet sind, verschwindende obere und untere Signallaufzeitgrenzwerte definiert sind.

9. System nach einem der Ansprüche 6 bis 8,
bei dem nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert sind.

10. System nach einem der Ansprüche 1 bis 9,
bei dem der Ereignissteuerung eine Überprüfungseinheit zugeordnet ist, die für eine Durchführung einer Simulation des technischen Prozesses unter Vorgabe der oberen Signallaufzeitgrenzwerte und für eine Durchführung einer Simulation des technischen Prozesses unter Vorgabe der unteren Signallaufzeitgrenzwerte eingerichtet und ausgestaltet ist.

11. Verfahren zur Steuerung und/oder Überwachung von technischen Prozessen in einem industriellen Automatisierungssystem, bei dem
- die Steuerung des technischen Prozesses mittels einer Funktionsblöcke umfassenden Ereignissteuerung durchgeführt wird, wobei die Funktionsblöcke jeweils zumindest einen Ereignis- und/oder Daten-Eingang zur Aufnahme von Eingangssignalen, zumindest einen Ereignis- und/oder Daten-Ausgang zur Ausgabe von Ausgangssignalen, eine Eingangssignale in Ausgangssignale umsetzende Ablaufsteuerungseinheit und einen veränderbaren von der Ablaufsteuerungseinheit verarbeitbaren Ablaufsteuerungsplan umfassen, und wobei Verknüpfungen zwischen Funktionsblöcken durch Signalverbindungen realisiert sind,
- für Signalverbindungen ein oberer und unterer Signallaufzeitgrenzwert festgelegt wird, unter deren Berücksichtigung eine Simulation oder Beobachtung des technischen Prozesses durchgeführt wird,
- anhand festgelegter Signallaufzeitgrenzwerte Signallaufzeitauswirkungen innerhalb der Ereignissteuerung ermittelt und/oder dargestellt werden,
- mittels einer der Ereignissteuerung zugeordneten Konfigurationseinheit Funktionsblock-Parameter anhand ermittelter Signallaufzeitauswirkungen modifiziert und/oder verifiziert werden,
- ein modifizierter Parametersatz mittels der Konfigurationseinheit an ein Automatisierungsgerät innerhalb des industriellen Automatisierungssystems übertragen wird.

12. Verfahren nach Anspruch 11,
bei dem durch einen Ablaufsteuerungsplan jeweils Zustandsübergänge eines Zustandsautomaten definiert werden, der von einer Ablaufsteuerungseinheit eines Funktionsblocks umfaßt ist.

13. Verfahren nach einem der Ansprüche 11 oder 12,
bei dem für jede Signalverbindung ein individueller oberer und unterer Signallaufzeitgrenzwert festgelegt wird.

14. Verfahren nach einem der Ansprüche 11 bis 13,
bei dem der obere oder untere Signallaufzeitgrenzwert ein uneigentlicher Grenzwert ist, wobei durch den oberen und unteren Signallaufzeitgrenzwert ein halboffenes Intervall definiert wird.

15. Verfahren nach einem der Ansprüche 11 bis 14,
bei dem die oberen und unteren Signallaufzeitgrenzwerte für die Signalverbindungen zwischen den Funktionsblöcken in einer der Ereignissteuerung zugeordneten Schwellwertspeichereinheit gespeichert werden.

16. Verfahren nach einem der Ansprüche 11 bis 15,
bei dem ein Funktionsblock einem Automatisierungsgerät innerhalb des industriellen Automatisierungssystems zugeordnet ist.

17. Verfahren nach Anspruch 16,
bei dem für Signalverbindungen zwischen zwei Funktionsblöcken, die demselben Automatisierungsgerät zugeordnet sind, verschwindende obere und untere Signallaufzeitgrenzwerte definiert werden.

18. Verfahren nach einem der Ansprüche 16 oder 17,
bei dem für Signalverbindungen zwischen zwei Funktionsblöcken, die Automatisierungsgeräten innerhalb desselben lokalen Kommunikationsnetzes zugeordnet sind, verschwindende obere und untere Signallaufzeitgrenzwerte definiert werden.

19. Verfahren nach einem der Ansprüche 16 bis 18,
bei dem nur für Signalverbindungen zwischen zwei Funktionsblöcken, die über ein Weitverkehrskommunikationsnetz miteinander verbundenen Automatisierungsgeräten zugeordnet sind, nicht verschwindende obere und untere Signallaufzeitgrenzwerte definiert werden.

20. Verfahren nach einem der Ansprüche 10 bis 19,
bei dem der Ereignissteuerung eine Überprüfungseinheit zugeordnet ist, mittels derer eine Simulation des technischen Prozesses einerseits unter Vorgabe der oberen Signallaufzeitgrenzwerte und andererseits unter Vorgabe der unteren Signallaufzeitgrenzwerte durchgeführt wird.
